# EUROPEAN PATENT SPECIFICATION

(11) **EP 4 108 349 B1**
(45) Date of publication and mention of the grant of the patent: **29.04.2026**
(21) Application number: 21756208.1
(22) Date of filing: 10.02.2021
(51) Int. Cl.: C22B 3/06, C22B 3/08, C22B 3/38, C22B 3/42, C22B 3/46, C22B 1/02, C22B 5/04, C22B 7/00, C22B 15/00, C22B 19/20, C22B 23/00, B09B 3/00, B09B 3/35, B09B 3/70, B22F 1/00, B22F 1/05, B22F 1/145, B22F 9/08, H01M 10/54, C22C 1/04

(54) **METHOD FOR TREATING ALLOY**
VERFAHREN ZUR BEHANDLUNG EINER LEGIERUNG
PROCÉDÉ DE TRAITEMENT D'ALLIAGE

(30) Priority: 21.02.2020 JP 2020028091; 13.03.2020 JP 2020044434; 13.03.2020 JP 2020044435; 17.03.2020 JP 2020046616; 17.03.2020 JP 2020046617; 14.01.2021 JP 2021004484
(43) Date of publication of application: 28.12.2022
(73) Proprietor: SUMITOMO METAL MINING CO., LTD., Tokyo 105-8716 (JP)
(72) Inventor: TAKENOUCHI Hiroshi, Niihama-shi, Ehime 792-0002 (JP); ASANO Satoshi, Niihama-shi, Ehime 792-0002 (JP); HEGURI Shin-ichi, Niihama-shi, Ehime 792-0002 (JP); SHOUJI Hirofumi, Niihama-shi, Ehime 792-0002 (JP); KUDOU Keiji, Niihama-shi, Ehime 792-0002 (JP); MATSUOKA Itsumi, Niihama-shi, Ehime 792-0002 (JP); SANJO Shota, Niihama-shi, Ehime 792-0002 (JP); MATSUGI Takumi, Niihama-shi, Ehime 792-0002 (JP)
(74) Representative: Watermeyer, Nicholas
(86) International application number: PCT/JP2021/004903
(87) International publication number: WO 2021/166755

(56) References cited:
- WO-A1-2019/082533
- WO-A1-2020/013293
- CN-A- 102 923 795
- CN-A- 105 063 349
- JP-A- 2010 174 366
- JP-A- 2015 183 292
- JP-A- 2016 191 119
- JP-A- 2016 191 134
- JP-A- 2019 077 912
- JP-A- 2019 081 915
- JP-A- 2019 094 556
- JP-A- 2019 108 586
- US-B1- 6 440 194

## Description

### TECHNICAL FIELD

The present invention relates to an alloy processing method and more specifically to an alloy processing method for obtaining a nickel- and/or cobalt-containing solution from an alloy including copper and nickel and/or cobalt.

### BACKGROUND ART

Lithium ion batteries (hereinafter also referred to as "LIBs"), characterized by lightweight and high power, are installed in vehicles, such as electric vehicles and hybrid cars, and in electronic devices, such as cell phones, smart phones, and personal computers.

An example of an LIB has a structure including: an outer case made of metal, such as aluminum or iron, or a plastic, such as vinyl chloride resin; a negative electrode material including a copper foil as a negative electrode current collector and a negative electrode active material, such as graphite, bonded to the surface of the copper foil; a positive electrode material including an aluminum foil as a positive electrode current collector and a positive electrode active material, such as lithium nickelate or lithium cobaltate, bonded to the aluminum foil; a separator including, for example, a porous polypropylene resin film; and an electrolytic solution including an organic solvent and an electrolyte, such as lithium hexafluorophosphate (LiPF₆), in the solvent, in which the separator and the negative and positive electrode materials are provided inside the outer case, and the separator is impregnated with the electrolytic solution.

After operating for a certain period in vehicles or electronic devices as mentioned above, LIBs will no longer be able to operate due to the degradation of the vehicles or electronic devices or the end of their lifetime, which will result in discarded lithium ion batteries (discarded LIBs). Discarded LIBs also include defective products occurring in the original LIB manufacturing process.

These discarded LIBs contain valuable components, such as nickel, cobalt, and copper, which are desired to be recovered and reused for economical use of resources.

A process for efficiently recovering valuable components from devices, parts, or other materials including metals usually includes a pyrometallurgical process including: introducing the materials into a furnace for melting at high temperature; and separating a metallic material including the valuable components from other materials in the form of slags, which is conventionally in wide use.

For example, Patent Document 1 discloses a method of recovering valuable metals using a pyrometallurgical process. The method disclosed in Patent Document 1 can be used for recovering valuable metals from discarded LIBs so that copper alloys containing nickel and cobalt can be obtained. Patent Document 2 discloses a method for producing alloy powder comprising Ni, Co and Cu from waste lithium ion batteries, and Patent Document 3 discloses a method for treating a solution derived from battery waste leaching.

Such a pyrometallurgical process advantageously enables a variety of impurities to be separated at a time, although it is disadvantageously energy-consuming since it uses a furnace for heating at high temperature. Such a pyrometallurgical process is also advantageous in that the resulting slag is chemically stable, less likely to have an impact on the environment, and easy to deal with.

Unfortunately, such a pyrometallurgical process has a problem in that when it is used for treating discarded LIBs, some of the valuable components (in particular, cobalt) are almost entirely distributed into the slag, which means an unavoidable loss in cobalt recovery.

Moreover, the metallic material resulting from the pyrometallurgical process is an alloy including coexisting valuable components, which needs to be subjected to refining and impurity removal such that the coexisting valuable components can be individually separated from the alloy and reused.

A method usually used for separating elements in the pyrometallurgical process includes gradually cooling a high-temperature molten material to separate, for example, copper and lead or lead and zinc. Unfortunately, when copper and nickel are main components, such as those in discarded LIBs, they will uniformly melt together in all composition ranges, which means that the gradual cooling will convert them into only a mixed layered solid and not allow copper and nickel to be separated from each other.

Another refining method includes allowing nickel to undergo a disproportionation reaction with carbon monoxide (CO) to volatilize and separate the product from copper and cobalt. Unfortunately, such a method has a problem in that the use of the toxic CO gas makes it difficult to ensure safety.

Another method used industrially to separate copper and nickel includes roughly separating a mixture of mattes (sulfides). This method includes performing a smelting process to produce mattes containing copper and nickel; and gradually cooling the mattes in a way similar to that mentioned above, to separate a copper-rich sulfide and a nickel-rich sulfide. Unfortunately, this separation method can only roughly separate copper and nickel and needs an additional process, such as electrolytic refining, when nickel and copper should be obtained at high purity.

Other methods have also been studied that include producing chlorides and separating the chlorides based on their difference in vapor pressure. Unfortunately, such methods involve the process of handling a large amount of toxic chlorine and thus need extensive measures to prevent equipment corrosion and to ensure safety, which is hardly considered suitable for industrial use.

Thus, the pyrometallurgical process is disadvantageous as compared to the hydrometallurgical process because the level of separation and refinement of each element is lower or the process cost is higher in the former than in the latter.

In contrast, the hydrometallurgical process (wet process), which is based on a hydrometallurgical smelting method and includes acid leaching, neutralization, solvent extraction, and other methods, is advantageous in that it is less energy-consuming and able to separate individual valuable components from a mixture and to recover the individual valuable components at a high purity grade.

Unfortunately, when used for the treatment of discarded LIBs, the hydrometallurgical process allows hexafluorophosphate anions (an electrolyte component of discarded LIBs) to mix into an acid solution containing the leached valuable components, since the hexafluorophosphate is a hard-to-treat substance that cannot be completely decomposed even with sulfuric acid at high concentration and high temperature. Hexafluorophosphate anions are a water-soluble carbonate ester, which means that it is difficult to recover phosphorus and fluorine from the aqueous solution obtained after the recovery of the valuable components and that there are many environmental restrictions, such as the need to take a variety of measures to reduce the emission of such substances into public marine areas and other areas.

It is also not easy to efficiently leach valuable components from discarded LIBs using only an acid or to obtain a solution that contains leached valuable components and is ready to be subjected to refining. Since the main body of the discarded LIB is resistant to acid leaching, it is not easy to completely leach the valuable components.

If a strongly oxidizing acid is used to perform aggressive leaching, not only the valuable components but also impurity components, such as aluminum, iron, and manganese, not intended to be recovered industrially, can be leached, which will cause problems, such as the need to treat the impurities by neutralization and other processes, an additional cost for the neutralizing agent, and an increase in the amount of discharged water or the amount of sediments.

Furthermore, discarded LIBs may still have a residual charge. In such a case, a time-consuming process for releasing the residual charge is necessary since the risk of heat or explosion remains if the LIBs are treated without any modification.

Thus, using only the hydrometallurgical process to treat discarded LIBs is not always considered an advantageous way.

Under such circumstances, attempts have been made to treat discarded LIBs, which are difficult to treat completely by the pyrometallurgical or hydrometallurgical process alone, by a combination of pyrometallurgical and hydrometallurgical processes, which specifically includes performing a pyrometallurgical process, including the roasting of the discarded LIBs, to remove impurities as much as possible and to produce a homogeneous processed material from the discarded LIBs; and subjecting the processed material to a hydrometallurgical process to separate valuable components from other components.

In the combination of pyrometallurgical and hydrometallurgical processes, fluorine and phosphorus derived from the electrolytic solution can be volatilized and removed by the pyrometallurgical process, while organic components, such as plastics and separators as structural components of the discarded LIBs, can be decomposed by heat. The processed material produced from the discarded LIBs by the pyrometallurgical process is in a homogeneous state and thus provides a homogeneous starting material easy to handle for the hydrometallurgical process.

Unfortunately, only a simple combination of pyrometallurgical and hydrometallurgical processes still has the problem of recovery loss caused by the distribution of cobalt from the discarded LIBs into the slag as mentioned above.

To address this problem, the treatment conditions for the pyrometallurgical process may be controlled so that reductive melting can be performed in such a way that cobalt is distributed into the metallic material rather than the slag or that the distribution of cobalt into the slag is reduced. Unfortunately, such a method may produce a metallic material in the form of an insoluble, corrosion-resistant, copper-based alloy containing nickel and cobalt. Since such a corrosion-resistant alloy is hardly soluble in an acid, it will be impossible to effectively recover valuable components from the corrosion-resistant alloy.

For example, chlorine gas may be used for the leaching of the corrosion-resistant alloy. In such a case, a solution (leachate) can be obtained which contains a high concentration of copper and relatively low concentrations of nickel and cobalt. From such a solution, nickel and cobalt can be easily separated by a known method, such as solvent extraction, but specifically, it is difficult to achieve easy and low-cost separation of copper from nickel and cobalt.

As described above, when alloys containing valuable components, such as copper, nickel, and cobalt, and various other components are obtained from discarded LIBs, it is difficult to efficiently separate nickel and cobalt from copper. The problem can also occur when copper-, nickel-, and cobalt-containing, discarded batteries other than discarded LIBs are subjected to a process for separating nickel and cobalt from copper. The same problem can also occur when copper-, nickel-, and cobalt-containing alloys derived from materials other than discarded batteries are subjected to a process for separating nickel and cobalt from copper.
Patent Document 1: Japanese Unexamined Patent Application, Publication No. 2012-172169
Patent Document 2: WO2020013293A1
Patent Document 3: CN102923795A
Patent Document 4: Japanese Unexamined Patent Application, Publication No. S63-259033

### DISCLOSURE OF THE INVENTION

### Problems to be Solved by the Invention

The present invention has been made in light of such circumstances. It is an object of the present invention to provide an alloy processing method capable of selectively separating nickel and/or cobalt from an alloy including copper and nickel and/or cobalt, such as an alloy obtained from discarded lithium ion batteries.

### Means for Solving the Problems

The solution to the problem is as disclosed in the invention according to the claims.

### Effects of the Invention

The present invention makes it possible to provide a process capable of selectively separating nickel and/or cobalt from an alloy including copper and nickel and/or cobalt, such as an alloy obtained from discarded lithium ion batteries.

### BRIEF DESCRIPTION OF THE DRAWINGS

FIG. 1 is a flowchart of an alloy processing method;
FIG. 2 is a graph showing the relationship between the oxidation-reduction potential of a leachate and the leaching rates of nickel and copper in examples;
FIG. 3 is a graph showing the relationship between the leaching time period for production of a leachate and the leaching rate of nickel in the leachate in Example 3;
FIG. 4 is a graph showing the time course of the consumption of a sulfuric acid aqueous solution used to maintain the pH of the slurry in Example 3;
FIG. 5 is a graph showing the proportion of consumption of a sulfuric acid aqueous solution used for each element at each pH in Example 3;
FIG. 6 is a graph showing the relationship between the leaching time period and the leaching rate of nickel in Example 4;
FIG. 7 is a graph showing the relationship between the consumption of sulfuric acid and the oxidation-reduction potential (ORP) in Example 4; and
FIG. 8 is a graph showing the time course of ORP value against leaching time for which an atomized powder of each particle size type is subjected to a leaching treatment in Example 5.

### PREFERRED MODE FOR CARRYING OUT THE INVENTION

Hereinafter, specific modes of the present invention (hereinafter referred to as "embodiments") will be described in detail. It should be noted that the embodiments described below are not intended to limit the present invention and may be appropriately altered or modified for implementation within the scope of the present invention. As used herein, the expression "X to Y", wherein X and Y each represent any numerical value, is intended to mean "X or more and Y or less".

### 1. Alloy Processing Method

The alloy processing method according to an embodiment is for producing a solution containing nickel and/or cobalt from an alloy including copper and nickel and/or cobalt. In other words, it is for selectively separating nickel and/or cobalt from copper, in which nickel and/or cobalt and copper are components of the alloy.

The alloy including copper and nickel and/or cobalt, which is to be processed, may be, for example, a waste derived from degraded vehicles or electronic devices, a scrap derived from end-of-life lithium ion batteries, or an alloy obtained by a process that includes subjecting, to heat-melting and reduction, discarded batteries, such as defective products generated in the battery manufacturing process, as raw materials.

The alloy may be obtained by a process that includes subjecting discarded lithium ion batteries as raw materials to heat-melting. Such a process may be a pyrometallurgical process that includes, for example, mechanically scrapping discarded lithium ion batteries; subjecting the scraps to oxidative roasting to separate carbon and aluminum, which are derived from the electrode materials and cases, and fluorine and phosphorus, which are derived from the electrolyte, and to obtain a roasted product (an oxidatively roasted product); adding a reducing agent to the oxidatively roasted product and subjecting the mixture to reductive melting to produce a reduced metallic material and a slag; and subjecting the reduced metallic material to an atomization process or other processes to produce fine particles. In such a process, the degree of reduction can be controlled by, for example, properly managing the partial pressure of oxygen in the atmosphere used during the reductive melting, so that impurities can be effectively separated while cobalt is prevented from being distributed to the slag.

Moreover, the alloy may be formed into fine particles, specifically, with a particle size suitable for acid leaching in the leaching step described later, which will contribute to an increase in leaching efficiency.

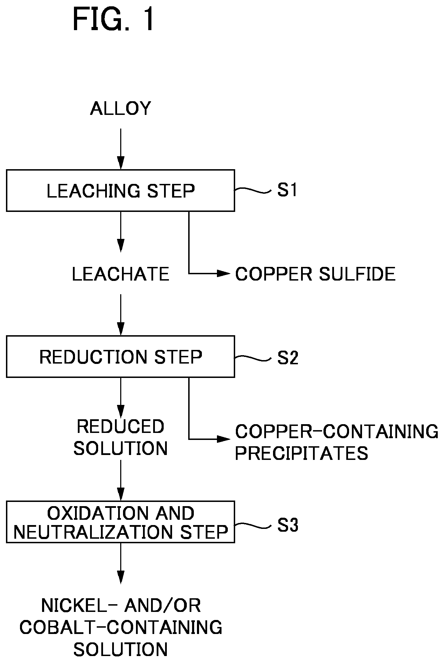

FIG. 1 is a flowchart of the alloy processing method according to an embodiment.

Specifically, the alloy processing method according to an embodiment includes a leaching step S1 that includes subjecting the alloy, which is to be processed, to a leaching treatment with an acid in the presence of a sulfurizing agent to produce a leachate; a reduction step S2 that includes subjecting the leachate to a reduction treatment with a reducing agent to produce a reduced solution; and an oxidation and neutralization step S3 that includes adding an oxidizing agent and a neutralizing agent to the reduced solution to produce a solution containing nickel and/or cobalt.

The leaching step S1 includes performing the leaching treatment at an oxidation-reduction potential being controlled within a range of 240mV or more and 300 mV or less with respect to a silver-silver chloride electrode as a reference electrode during the leaching treatment with an acid solution.

The leaching step S1 also preferably includes performing the leaching treatment at a pH being controlled within a predetermined range using an acid solution.

The leaching step S1 also preferably includes performing the leaching treatment with an acid solution at a leaching temperature being controlled within a predetermined range.

In the leaching step S1, the alloy, which is subjected to the leaching treatment, is preferably in the form of a powder with a predetermined particle size, which is produced by atomization or other methods.

Hereinafter, the alloy processing method will be more specifically described with reference to examples in which the alloy including copper and nickel and/or cobalt, to be processed, is a product obtained through the melting of discarded lithium ion batteries (discarded LIBs).

### (1) Leaching Step

The leaching step S1 includes subjecting the alloy to a leaching treatment with an acid in the presence of a sulfurizing agent to produce a leachate. In other words, the alloy is brought into contact with the sulfurizing agent and the acid at the same time in the leaching treatment.

In the leaching step S1, the leaching treatment can cause reactions represented by Reaction Formulae (1) to (5) shown below. The following formulae represent reactions with solid sulfur (S) as the sulfurizing agent and sulfuric acid as the acid.

Cu + S → CuS (1)

Ni + H₂SO₄ + 1/2O₂ → NiSO₄ + H₂O (2)

Co + H₂SO₄ + 1/2O₂ → CoSO₄ + H₂O (3)

H₂S + 1/2O₂ → S + H₂O (4)

CuS + 2O₂ → CuSO₄ (5)

As shown by the reaction formula, when the alloy in contact with the sulfurizing agent undergoes a leaching reaction with the acid, copper is leached from the alloy by the reaction and forms a sulfide of copper (Formula (1)). Nickel and/or cobalt are also leached with the acid, and the leachate contains them in the form of ions (Formulae (2) and (3)). Leached nickel and/or cobalt may react with the sulfurizing agent to form a sulfide(s). Even in such a case, the sulfide will undergo decomposition due to the presence of the acid, so that the leachate will contain nickel and cobalt in the form of ions.

### Alloy

The alloy obtained through the melting of discarded lithium ion batteries contains not only copper, nickel, and cobalt but also a variety of impurities, which are not intended to be recovered. In an embodiment, the leaching treatment of the alloy, in which the acid coexists with the sulfurizing agent, leaches copper from the alloy and precipitates it in the form of copper sulfide, which will be separated. The leaching treatment of the alloy with the acid also leaches nickel and/or cobalt from the alloy into the leachate. The leachate may contain residual components, such as a copper residue remaining unreacted with the sulfurizing agent, and iron and/or phosphorus, zinc, manganese, and other impurities.

The alloy obtained through the melting of discarded lithium ion batteries, which is to be processed, may be provided in any shape, such as a plate-shaped cast alloy, a rod-shaped alloy obtained by appropriately cutting a drawn wire, or an alloy powder obtained by atomization (hereinafter, such an alloy powder will also be referred to as "atomized powder" for the sake of convenience).

In particular, when the alloy to be processed is in the form of a powder, such as an atomized powder, the alloy will effectively undergo the leaching treatment with the acid, which leads to effective leaching of nickel and/or cobalt. The term "atomization" refers to a process that includes bringing high-pressure gas or water into contact with a molten metal to scatter and rapidly cool (solidify) the molten metal into a powder.

When the alloy is in the form of a powder, such as an atomized powder, the powder preferably has a particle size of less than approximately 300 µm, so that it can more effectively undergo the leaching treatment. If the particle size is too small, the process for forming fine particles may be costly and may cause dust emission or ignition. Therefore, the powdered alloy preferably has a particle size of approximately 10 µm or more.

Before being subjected to the leaching treatment, the alloy is preferably subjected to preliminary washing with a diluted acid. This makes the surface of the alloy more active for the treatment and makes possible an accelerated leaching reaction.

### Acid

The acid may be any type as long as it can be used for the leaching treatment at a pH being controlled within the range of 0.8 or more and 2.0 or less as described later. The acid may be, for example, a strong acid alone, such as hydrochloric acid, sulfuric acid, or nitric acid, or any mixture of them. The acid to be used may also be produced by adding a chloride to sulfuric acid. In particular, the acid preferably includes sulfuric acid when what is called "battery-to-battery" recycling should be achieved, which is an ideal recycling process that includes recycling discarded lithium ion batteries as raw materials for new lithium ion batteries. When the acid is sulfuric acid, the resulting leachate will contain a sulfate, which is easy to use as a positive electrode material for lithium ion batteries.

The amount of the acid used for the leaching treatment may be 1 equivalent or more, preferably 1.2 equivalents or more, more preferably 1.2 equivalents or more and 11 equivalents or less, based on the total amount of nickel and/or cobalt in the alloy. As the acid concentration increases, the leaching reaction rate will increase. For example, in order to adjust the pH to 0.8 or more, the amount of the acid is preferably adjusted to 1.2 equivalents or more and 2 equivalents or less.

The leaching treatment may include supplying the acid and the alloy to an apparatus having multiple mixing units connected to one another, such as a thickener; and bringing the acid and the alloy gradually into contact with each other in countercurrent flow in the apparatus. For example, the alloy and the acid may be supplied respectively to the top and bottom mixing units of the apparatus, and brought gradually into contact with each other in countercurrent flow.

### Sulfurizing Agent

The sulfurizing agent, which is added together with the acid, may be, for example, sodium hydrosulfide or elemental sulfur. When elemental sulfur is used, it is preferably pulverized into a particle size suitable for acceleration of the reaction.

The amount of the sulfurizing agent is preferably 1 equivalent or more based on the amount of copper in the alloy.

The sulfurizing agent and the acid may be simultaneously added to the alloy. Preferably, the sulfurizing agent is first added to the alloy, and then the acid is added to the mixture. If the acid and the sulfurizing agent are simultaneously added to the alloy, a rapid reaction might occur to cause bumping. Such a rapid reaction will be prevented if the sulfurizing agent is first added and then the acid is added and brought into contact with the alloy. The process of first adding the sulfurizing agent and then adding the acid may include, for example, placing the alloy and the sulfurizing agent in a solvent, such as water; and then adding the acid to the solvent. Air bubbling or other methods may be carried out to allow the reaction to proceed uniformly.

### Conditions for Leaching Treatment

For the leaching treatment, preliminary experiments are preferably performed to determine suitable ranges of treatment conditions, such as treatment time period, the concentration of a slurry obtained by adding the acid and the sulfurizing agent to the alloy, and other conditions.

Specifically, the leaching treatment preferably includes measuring the oxidation-reduction potential (ORP) and pH of the leachate; and monitoring and controlling the range of the measured ORP and pH. Adjusting the range of the leaching reaction temperature makes it possible to more appropriately control the ORP and pH and to accelerate the leaching treatment. Subjecting, to the treatment, the alloy in the form of particles with a particle size within a predetermined range also makes it possible to control the leaching treatment conditions more appropriately. In the alloy processing method according to an embodiment, the leaching treatment conditions may be controlled one by one within a suitable range. More preferably, two or more of the leaching conditions are controlled in combination with one another so that an optimal range can be selected.

### Control of ORP

Specifically, the ORP is controlled to 240 mV or more and 300 mV or less, more preferably 240 mV or more and 280 mV or less, with respect to a silver-silver chloride electrode as a reference electrode.

A specific method of controlling the ORP includes, for example, adding an oxidizing agent. The oxidizing agent may be oxygen, air, hydrogen peroxide, ozone gas, or any other conventionally known one. For example, when the oxidizing agent is gaseous (or in a gas state), it may be bubbled into the solution while its supply (its feed rate) is adjusted, so that the ORP of the leachate will be controlled in the leaching treatment. Specifically, when the ORP of the leachate is at too high a level, the feed of the oxidizing agent may be reduced or stopped so that the ORP will decrease. Conversely, when the ORP has decreased to near the lower limit, the feed of the oxidizing agent may be increased so that the ORP will increase.

When the leaching treatment is carried out with the ORP being controlled within, for example, the range mentioned above, the leaching of nickel and/or cobalt will be accelerated and re-dissolution of the precipitated copper sulfide will be prevented, which would otherwise be caused by excessive oxidation, so that nickel and/or cobalt will be more effectively separated from copper.

### Control of pH

While the ORP is controlled and maintained, the pH of the acid solution is preferably controlled within the range of 0.8 or more and 1.6 or less, more preferably within the range of 0.8 or more and 2.0 or less. When the pH is controlled and maintained within such a range, the leaching reaction will be accelerated and re-dissolution of the precipitated copper sulfide will be prevented, which would otherwise be caused by excessive oxidation. When the pH is controlled within the more preferred range of 0.8 or more and 2.0 or less, the leaching treatment will be more efficiently performed and consumption of the acid and the agent for neutralizing the acid will be reduced, which is advantageous in terms of productivity.

The pH may be controlled by controlling the amount of addition of the acid. For example, to adjust the pH to 0.8 or more, the acid may be added in an amount of 1.2 equivalents or more and 2 equivalents or less based on the total amount of nickel and/or cobalt in the alloy.

In particular, when the acid is sulfuric acid, adjusting the pH to 0.8 or more in the leaching treatment will effectively prevent the generation of hydrogen sulfide gas.

Controlling and maintaining the ORP and the pH within the ranges as described above in the leaching treatment will make it possible to accelerate the leaching reaction and to prevent re-dissolution of the precipitated copper sulfide, which would otherwise be caused by excessive oxidation. The ORP varies with pH and temperature. In the leaching treatment, therefore, the ORP, the pH, and the solution temperature should preferably be measured at the same time and should preferably be controlled individually to fall within appropriate ranges at the same time.

### Control of Leaching Reaction

The reaction temperature also has a significant effect on the leaching treatment in the leaching step S1 and on the treatments in the subsequent steps. In the alloy processing method according to an embodiment, the leaching treatment of the alloy with the acid in the presence of the sulfurizing agent preferably includes controlling the leaching reaction temperature within the range of 50°C or more and 80°C or less. The term "leaching reaction temperature" or "leaching temperature" refers to the temperature of the reaction solution (leachate) during the leaching.

If the leaching temperature is less than 50°C, the ORP of the leachate may fail to fall within the range suitable for the leaching of nickel and/or cobalt, so that the rate of the reactions represented by Formulae (2) and (3) may be low and that the leaching may take a long time.

In contrast, if the leaching temperature is 50°C or more, the rate of the reactions represented by Formulae (2) and (3) will be high enough to leach nickel and/or cobalt in a short period of time. Moreover, the leaching will be accelerated, so that the leaching rate of nickel and/or cobalt will increase. The leaching temperature is more preferably 55°C or more, even more preferably 60°C or more.

If the leaching temperature exceeds 80°C, the reactions represented by Formulae (2) and (3) may proceed excessively, which may make it difficult to control the ORP of the leachate. As a result, hydrogen sulfide gas may be generated from the coexisting sulfurizing agent and released from the leachate. If hydrogen sulfide gas is released from the leachate, the sulfurization reaction of copper represented by Formula (1) may fail to proceed when copper is leached with the acid, so that it may be difficult to precipitate copper in the form of cupper sulfide. Although the hydrogen sulfide gas can be oxidized to sulfur by oxygen (see Reaction Formula (4) above), hydrogen gas, if generated together with the hydrogen sulfide gas, will inhibit the oxidation reaction represented by Formula (4).

On the other hand, if the leaching temperature is 80°C or less, the alloy will smoothly undergo the leaching treatment in the presence of the sulfurizing agent, so that copper will be effectively separated in the form of copper sulfide. The leaching temperature is more preferably 75°C or less, even more preferably 70°C or less.

### Alloy Particle Size

The alloy supplied to the leaching treatment is preferably in the form of particles with a particle size of less than 500 µm. For example, the alloy is preferably in the form of a pulverized product with a particle size of less than 500 µm.

When the alloy including copper and nickel and/or cobalt is brought into contact with the acid in the presence of the sulfurizing agent, nickel and/or cobalt is leached in the form of ions from the surface of the alloy, and copper is sulfurized by the sulfurizing agent to form a sulfide of copper (copper sulfide) on the surface of the alloy. The produced copper sulfide leaves the surfaces of the particles due to the contact between the particles and the collision of the particles with baffles or other components in the reaction vessel, so that unreacted nickel and/or unreacted cobalt is newly exposed on the surface of the alloy.

In this way, the leaching treatment of the alloy starts from the surface of the alloy. Thus, if the alloy is in the form of particles with a particle size of 500 µm or more, it may take a long period of time for the leaching reaction to reach the center of each particle. On the other hand, if the alloy being subjected to the leaching treatment is in the form of particles with a particle size of less than 500 µm, nickel and/or cobalt will be leached at a high rate and thus will be effectively leached in a short period of time.

The alloy to be processed is more preferably in the form of a powder with a particle size of less than 300 µm, even more preferably in the form of a powder with a particle size of less than 150 µm.

In particular, when the alloy in the form of a powder with a particle size of less than 150 µm is subjected to the leaching treatment, nickel and/or cobalt will be leached not only at a higher rate but also with a higher yield. Although the reason for this is not necessarily clear, the leaching treatment of the powder with a particle size of less than 150 µm can be considered to proceed at a leaching rate suitable for the control of the ORP.

As mentioned above, the alloy to be processed may be a pulverized product with a particle size of less than 500 µm resulting from a conventionally known pulverization method. The pulverized product is preferably a powder, such as an atomized powder resulting from atomization. The atomized powder can have a controlled particle size of less than 500 µm, which is suitable to be subjected to the leaching treatment. The term "atomization" refers to a process that includes bringing high-pressure gas or water into contact with a molten metal to scatter and rapidly cool (solidify) the molten metal into a powder.

Specifically, the atomized powder may be produced from a reduced metallic material obtained through subjecting discarded lithium ion batteries to a pyrometallurgical process. In this case, the atomized powder is almost free of particles with particle sizes of at least 500 µm. The atomized powder produced from discarded lithium ion batteries also has a high content of particles with particle sizes of less than 150 µm, which helps to achieve the leaching rate of nickel and/or cobalt within a very preferred range.

### Other Conditions

At what point the leaching reaction should be ended may be determined through measuring the ORP of the leachate. For example, the point at which no reduction in the ORP value of the leachate is observed when no alloy is newly added to the reaction vessel may be determined to be the end point of the leaching of nickel and/or cobalt.

The ORP of the leachate is preferably maintained within the range of 240 mV or more and 300 mV or less until the precipitated copper sulfide is separated from the leachate. Otherwise, the precipitated copper sulfide may undergo oxidation, which may cause copper to be leached again after the leaching treatment of the alloy is completed.

The leaching treatment may also include adding divalent copper ions. In this case, the divalent copper ions will act as a catalyst to accelerate the leaching reaction.

### (2) Reduction Step

The reduction step S2 includes subjecting the leachate, which is obtained by the treatment in the leaching step S1, to a reduction treatment with a reducing agent to produce a reduced solution containing nickel and/or cobalt. In the leaching treatment of the leaching step S1 described above, copper is sometimes partially leached together with nickel and/or cobalt from the alloy and dissolved into the acid solution, and sometimes partially remains unreacted with the sulfurizing agent in the solution. In the reduction step S2, therefore, such a small amount of copper remaining in the leachate is reduced to a copper-containing precipitate, which is separated by solid-liquid separation, so that a reduced solution containing nickel and/or cobalt is obtained.

Specifically, when the ORP of the leachate is controlled to 280 mV or more during the leaching treatment in the leaching step S1, copper tends to be leached simultaneously with nickel and/or cobalt so that the leachate may contain a certain amount of copper, although the leaching rate of nickel and/or cobalt will be high. Similarly, when the pH of the leachate is controlled to 1.6 or less during the leaching treatment, copper tends to be leached simultaneously with nickel and/or cobalt so that the leachate may contain a certain amount of copper, although the leaching rate of nickel and/or cobalt will be high.

To address this point, the leachate obtained through the leaching step S1 is subjected to the reduction treatment with the reducing agent so that copper is selectively separated while the leaching rate of nickel and/or cobalt is kept high.

The reducing agent may be, for example, a metal more base than copper. In particular, a metallic material including nickel and/or cobalt is preferably used and brought into contact with the leachate to reduce copper. In the alloy processing method according to an embodiment, which is to produce a solution containing nickel and/or cobalt, a metallic material including nickel and/or cobalt is preferably used as the reducing agent, which is industrially advantageous because such a reducing agent does not need to be recovered in any additional later step.

Besides the metallic material, a sulfide may also be used as the reducing agent. The sulfide may be solid, liquid, or gas (gaseous). The reducing agent may also be a mixture of sulfur and a powder of the alloy, which is the target of the leaching treatment. Alternatively, the reducing agent may be an atomized powder produced by rapidly cooling the molten alloy, which is the target of the treatment.

The reduction treatment may be performed by any appropriate method. When the reducing agent is solid or liquid, the reduction treatment may include adding the reducing agent directly to the leachate. When the reducing agent is gas (gaseous), the reduction treatment may include bubbling the reducing agent into the leachate.

Preliminary experiments are preferably carried out to select optimal ranges of the amount of addition of the reducing agent and the reaction temperature. The reduction treatment preferably includes monitoring the oxidation-reduction potential (ORP) and the pH; and controlling the amount of addition of the reducing agent as appropriate. Preliminary experiments are also preferably carried out to select optimal ranges of the ORP and the pH.

### (3) Oxidation and Neutralization Step

The oxidation and neutralization step S3 includes adding an oxidizing agent and a neutralizing agent to the reduced solution, which is obtained by the treatment in the reduction step S2, to subject the reduced solution to oxidation and neutralization and thus to produce a solution containing nickel and/or cobalt.

Specifically, the oxidation and neutralization step S3 may include adding an oxidizing agent to the reduced solution to produce an oxidation reaction and adding a neutralizing agent to control the pH of the solution within a predetermined range, so that precipitates including impurities, such as iron and/or phosphorus, are produced from the reduced solution. In the oxidation and neutralization step S3, therefore, impurities, such as iron and/or phosphorus, are separated in the form of precipitates, so that a solution containing refined nickel and/or cobalt is obtained.

The oxidizing agent may be a conventionally known one, such as hydrogen peroxide or hypochlorous acid. Alternatively, the oxidizing agent may be air, pure oxygen, ozone gas, or any other oxygen-containing gas.

While the oxidizing agent is added, the oxidation-reduction potential (ORP) of the solution is preferably monitored and controlled within a predetermined range. Specifically, the oxidizing agent is preferably added to the solution such that the ORP of the solution is controlled, for example, within the range of 380 mV or more and 430 mV or less when a silver-silver chloride electrode is used as a reference electrode.

After the oxidizing agent is added to produce an oxidation reaction, the neutralizing agent may be added to control the pH of the solution preferably within the range of 3.8 or more and 4.5 or less. When the oxidation and neutralization treatment is performed in such a way that the pH is controlled within such a range in the neutralization treatment, impurities, such as iron and/or phosphorus, will be effectively precipitated.

The neutralizing agent may be any conventionally known one, such as sodium hydroxide or potassium hydroxide.

The oxidation and neutralization treatment may include adding the neutralizing agent to the reduced solution; and then adding the oxidizing agent to the mixture. Preferably, the oxidation and neutralization treatment includes adding the reducing agent and the neutralizing agent simultaneously to the reduced solution or includes adding the oxidizing agent to the reduced solution; and then adding the neutralizing agent to the mixture. In particular, the addition of the oxidizing agent to the reduced solution is more preferably followed by the addition of the neutralizing agent. For example, when the oxidizing agent is added to the reduced solution having an increased pH resulting from the addition of the neutralizing agent, iron, if included in the impurities, may fail to undergo a sufficient level of oxidation, so that effective production of precipitates (iron precipitates), such as Fe(OH)₃, may fail and that the separation of the impurities may be insufficient.

If the reduced solution contains zinc as an impurity, it will be difficult to remove only by the oxidation and neutralization treatment. If necessary, the zinc impurity may be removed by ion-exchange method, solvent extraction method, or other methods.

Specifically, zinc may be removed from the reduced solution by ion-exchange method using, for example, a chelating resin (ion-exchange resin) to adsorb zinc. Such a chelating resin may be an aminophosphate-based resin. Using the aminophosphate-based chelating resin, the concentration of zinc in the solution can be successfully reduced to approximately 1/10. The aminophosphate-based chelating resin is commercially available, such as Duolite C747 (trade name) manufactured by Sumika ChemteX Co., Ltd.

Alternatively, zinc may be removed from the reduced solution by solvent extraction method using an acidic phosphorus compound extractant. In such a case, the concentration of zinc in the solution can be successfully reduced to approximately 1/10. The acidic phosphorus compound extractant may be di-2-ethylhexylphosphoric acid (D2EHPA).

As described above, when the reduced solution obtained through the reduction step S2 contains zinc, the step of removing zinc (zinc removal step) may be added which includes subjecting the neutralized solution (post-neutralization solution), which is produced by the oxidation and neutralization treatment, to ion exchange treatment or solvent extraction treatment to remove zinc. This step effectively removes the zinc impurity and provides a solution containing nickel and/or cobalt, which may be called a post-zinc-removal solution.

In some cases, the reduced solution obtained through the reduction step S2 contains manganese. In such cases, the oxidation and neutralization treatment may include stepwise controlling the pH and the ORP within ranges, different from the ranges for the precipitation and removal of iron and/or phosphorus, to form and separate manganese precipitates.

### EXAMPLES

Hereinafter, the present invention will be more specifically described with reference to examples of the present invention, which are not intended to limit the present invention at all.

### Example 1: Processing of Alloy

### Leaching Step

Discarded lithium ion batteries (discarded LIBs) were subjected to a pyrometallurgical process including: subjecting them to oxidative roasting to obtain a roasted product; adding a reducing agent to the roasted product; and subjecting the mixture to heat-melting to reduce the roasted product. The molten alloy resulting from the reductive melting was poured into a small crucible with a hole at its bottom. High-pressure gas or water was sprayed to the molten alloy flowing out of the hole to scatter and solidify the molten alloy into a powdery material (atomized powder) with a particle size of less than 300 µm. The resulting atomized alloy powder was used as the target to be processed. Table 1 below shows the composition of the atomized powder (powdery material) analyzed with an inductively coupled plasma (ICP) analyzer.

**[Table 1]**

| | Content (% by mass) | | | | |
|---|---|---|---|---|---|
| | Ni | Co | Cu | Fe | P |
| Alloy (Powder) | 40 | 20 | 38 | 1.4 | 0.5 |

A slurry containing 200 g/L of the powder with the composition shown in Table 1 was prepared. A sulfurizing agent (button-shaped elemental sulfur granules 4 to 5 mm in diameter and 1 mm in thickness) and sulfuric acid were added to the slurry. Thus, the slurry underwent a leaching treatment with the acid in the presence of the sulfurizing agent. In the treatment, the leaching temperature was 70°C and the leaching time period was 6 hours. After the leaching treatment, the product was subjected to solid-liquid separation by filtration. The resulting filtrate (leachate) was subjected to analysis with an ICP analyzer in which the concentration of each element component was measured (in Table 2 below, the term "leachate" is used for the filtrate).

### Reduction Step

Next, a nickel powder (reducing agent) with a particle size of 1 µm to 300 µm was added to the resulting leachate. Thus, the leachate underwent a reduction treatment. After the reduction treatment, the product was subjected to solid-liquid separation by filtration. The resulting filtrate (reduced solution) was subjected to analysis with an ICP analyzer in which the concentration of each element component was measured (in Table 2 below, the term "reduced solution" is used for the filtrate).

### Oxidation and Neutralization Step

Next, while the temperature of the reduced solution was maintained within the range of 60°C to 70°C, 30% hydrogen peroxide water (oxidizing agent) was added to the reduced solution, which was followed by adding a sodium hydroxide solution (neutralizing agent). Thus, the reduced solution underwent an oxidation and neutralization treatment. During the oxidation and neutralization treatment, the oxidation-reduction potential (ORP) of the solution was within the range of 380 mV to 430 mV with respect to a silver-silver chloride electrode as a reference electrode, and the pH of the solution was within the range of 3.8 to 4.5. After the oxidation and neutralization treatment, the product was subjected to solid-liquid separation by filtration. The resulting filtrate (neutralized solution) was subjected to analysis with an ICP analyzer in which the concentration of each element component was measured (in Table 2 below, the term "neutralized solution" is used for the filtrate).

**[Table 2]**

| (g/L) | Ni | Co | Cu | Fe | P |
|---|---|---|---|---|---|
| Leachate | 76 | 38 | 5 | 3 | 1 |
| Reduced solution | 80 | 38 | 0.001 | 3 | 1 |
| Neutralized solution | 80 | 38 | 0.001 | 0.001 | 0.001 |

The analysis results shown in Table 2 indicate that the alloy to be subjected to the leaching treatment contained 38% by mass of copper (see Table 1) whereas the leachate contained 5 g/L of copper, which is lower than the concentration of nickel or cobalt. This should be because a large portion of copper was separated in the form of copper sulfide precipitates from the alloy (powder) by the leaching treatment.

Moreover, the concentration of copper in the leachate was 5 g/L whereas the concentration of copper in the reduced solution was as low as 0.001 g/L. This should be because the small amount of copper remaining in the leachate was reduced and separated in the form of precipitates by the reduction treatment.

Furthermore, the reduced solution had an iron concentration of 3 g/L and a phosphorus concentration of 1 g/L whereas the neutralized solution had an iron concentration of as low as 0.001 g/L and a phosphorus concentration of as low as 0.001 g/L. This should be because impurities such as iron and phosphorus were separated in the form of precipitates by the oxidation and neutralization treatment.

### Example 2: ORP Conditions

Discarded LIBs were subjected to a pyrometallurgical process as in Example 1. The molten alloy resulting from the reductive melting was poured into a small crucible with a hole at its bottom. High-pressure gas or water was sprayed to the molten alloy flowing out of the hole to scatter and solidify the molten alloy into a powdery material (atomized powder) with a particle size of at most 300 µm. The resulting atomized alloy powder was used as the target to be processed. Table 3 below shows the composition of the atomized powder (powdery material) analyzed with an ICP analyzer.

**[Table 3]**

| | Content (% by mass) | | | | | |
|---|---|---|---|---|---|---|
| | Ni | Co | Cu | Fe | Mn | S |
| Alloy (Powder) | 15 | 12 | 70 | 1.3 | 0.09 | 0.05 |

Next, 25.0 g of the atomized powder was sampled, and a sulfurizing agent (button-shaped elemental sulfur granules 4 to 5 mm in diameter and 1 mm in thickness) was provided in an amount of 1.25 equivalents (by mole) based on the amount of copper in the alloy.

Subsequently, the alloy powder and the sulfurizing agent were placed in a heat-resistant glass separable flask (volume 500 mL) with four baffles, to which 250 mL of pure water was added. The mixture was then stirred with a stirrer equipped with four inclined paddle blades made of Teflon (registered trademark) at a speed of 1,000 rpm, which prevented the atomized powder from settling on the bottom of the reaction vessel, to give a slurry.

An oxidizing agent (air) through a glass filter was also bubbled at a flow rate of 0.5 L/min into the mixture so that an oxidative atmosphere was maintained during the reaction.

After the air bubbling, the slurry was heated to the set temperature 60°C, and an acid solution (an aqueous solution of 64% by weight sulfuric acid) was added at a flow rate of 15 mL/h to reduce the pH of the slurry to 1.2. Subsequently, at the maintained pH and temperature, the oxidizing agent was added to control the oxidation-reduction potential (ORP) of the slurry while the atomized powder was subjected to the leaching treatment. More specifically, the oxidizing agent air was bubbled into the slurry to control the ORP during the leaching treatment. After the addition of sulfuric acid, 2 mL of the supernatant of the slurry was sampled every one hour during the leaching and subjected to analysis with an ICP analyzer in which the concentration of each of the components: copper, nickel, cobalt, iron, and sulfur was measured.

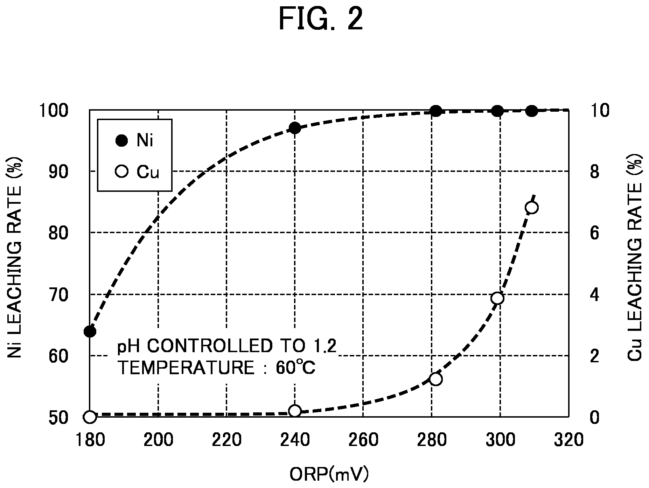

After 6 hours of the leaching treatment, the slurry was collected and subjected to solid-liquid separation. The amount of the resulting leachate and the amount of the residue were determined. Table 4 below shows the leaching treatment conditions and the results (final values) of the treatment under the set conditions. Table 5 below shows the leaching rates of copper, nickel, and cobalt, which were measured by ICP analysis. FIG. 2 is a graph showing the relationship between the ORP of the leachate (reference electrode: silver-silver chloride electrode) and the leaching rates of nickel and copper.

**[Table 4]**

| | Powder (Alloy) (g) | Sulfurizing agent | | Experimental conditions | | | Experimental conditions (Final values) | | | |
|---|---|---|---|---|---|---|---|---|---|---|
| | | Equivalents (vs Cu) | Mass (g) | pH | Temperature (°C) | Time (h) | Amount of sulfuric acid (ml) | Amount of solution (ml) | pH | ORP (mV) |
| Example 2 | 25.0 | 1.25 | 11.0 | 1.2 | 60 | 6.0 | 20.0 | 249 | 1.2 | 309 |

**[Table 5]**

| Leaching time (h) | ORP (mV) | Leaching rate (%) | | |
|---|---|---|---|---|
| | | Ni | Co | Cu |
| 6 | 309 | 100 | 100 | 6.8 |
| 5 | 299 | 100 | 100 | 3.9 |
| 4 | 281 | 100 | 100 | 1.2 |
| 3 | 194 | 97 | 97 | 0.0 |
| 2 | 180 | 64 | 63 | 0.0 |
| 1 | 120 | 30 | 32 | 0.0 |

FIG. 2 and Table 5 indicate that the ORP increased as the oxidizing agent was added and the leaching treatment was allowed to proceed. They also indicate that when the ORP reached 240 mV or more, higher leaching rates of nickel and cobalt were achieved, which means that sufficient leaching was achieved. It was also found that when the ORP exceeded 300 mV, the leaching rate of copper tended to increase.

These results indicate that the leaching treatment with an acid in the presence of a sulfurizing agent with the ORP (reference electrode: silver-silver chloride electrode) being controlled within the range of 240 mV or more and 300 mV or less is effective in separating copper from the alloy and obtaining nickel and/or cobalt from the alloy.

### Example 3: pH Conditions

Discarded LIBs were subjected to a pyrometallurgical process as in Example 1. The molten alloy resulting from the reductive melting was poured into a small crucible with a hole at its bottom. High-pressure gas or water was sprayed to the molten alloy flowing out of the hole to scatter and solidify the molten alloy into a powdery material (atomized powder) with a particle size of at most 300 µm. The resulting atomized alloy powder was used as the target to be processed. Table 6 below shows the composition of the atomized powder (powdery material) analyzed with an ICP analyzer.

**[Table 6]**

| | Content (% by mass) | | | | | |
|---|---|---|---|---|---|---|
| | Ni | Co | Cu | Fe | Mn | S |
| Alloy (Powder) | 15 | 12 | 70 | 1.3 | 0.09 | 0.05 |

Next, 25.0 g of the atomized powder was sampled, and a sulfurizing agent (button-shaped elemental sulfur granules 4 to 5 mm in diameter and 1 mm in thickness) was provided in an amount of 1.25 equivalents (by mole) based on the amount of copper in the alloy.

Subsequently, the alloy powder and the sulfurizing agent were placed in a heat-resistant glass separable flask (volume 500 mL) with four baffles, to which 250 mL of pure water was added. The mixture was then stirred with a stirrer equipped with four inclined paddle blades made of Teflon (registered trademark) at a speed of 1,000 rpm, which prevented the atomized powder from settling on the bottom of the reaction vessel, to give a slurry.

An oxidizing agent (air) through a glass filter was also bubbled at a flow rate of 0.5 L/min into the mixture so that an oxidative atmosphere was maintained during the reaction.

After the air bubbling, the slurry was heated to the set temperature 60°C, and an acid solution (an aqueous solution of 64% by weight sulfuric acid) was added at a flow rate of 15 mL/h to reduce the pH of the slurry to 0.8 to 2.0. Subsequently, at the maintained pH and temperature, the pH of the slurry was controlled by the addition of the acid solution while the atomized powder was subjected to the leaching treatment. More specifically, the slurry was subjected to the leaching treatment with the air being bubbled into the slurry and with the sulfuric acid aqueous solution being added to control the pH. After the addition of sulfuric acid, 2 mL of the supernatant of the slurry was sampled every one hour during the leaching and subjected to analysis with an ICP analyzer in which the concentration of each of the components: copper, nickel, cobalt, iron, and sulfur was measured.

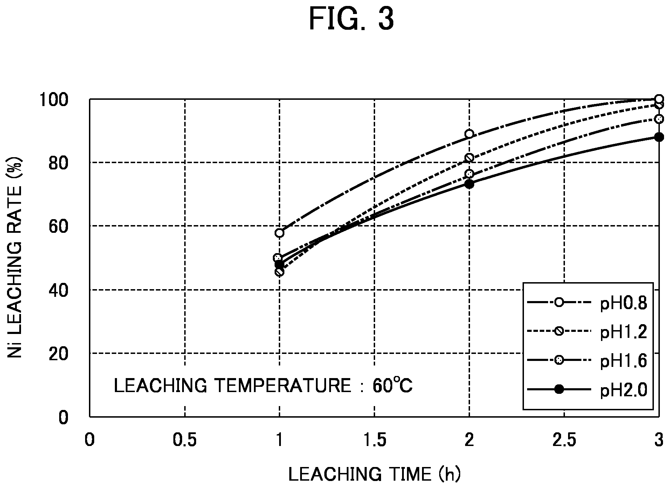

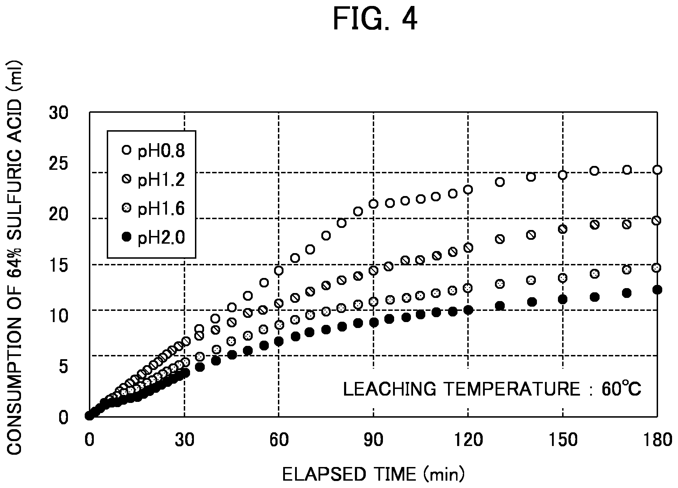

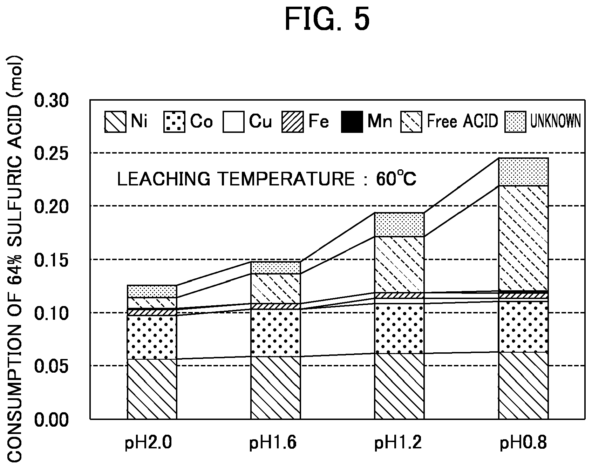

After 3 hours of the leaching treatment, the slurry was collected and subjected to solid-liquid separation. The amount of the resulting leachate and the amount of the residue were determined. Table 7 below shows the leaching treatment conditions and the results (final values) of the treatment under the set conditions. Table 8 shows the leaching rates of copper, nickel, and cobalt, which were measured by ICP analysis. FIG. 3 is a graph showing the relationship between the leaching time period for the production of the leachate and the leaching rate of nickel. FIG. 4 is a graph showing the time course of the consumption of the sulfuric acid aqueous solution used to maintain the pH of the slurry. FIG. 5 is a graph showing the proportion of consumption of the sulfuric acid aqueous solution used for each element at each pH.

**[Table 7]**

| | Powder (Alloy) (g) | Sulfurizing agent | | Experimental conditions | | | Experimental conditions (Final values) | | | |
|---|---|---|---|---|---|---|---|---|---|---|
| | | Equivalents (vs Cu) | Mass (g) | pH | Temperature (°C) | Time (h) | Amount of sulfuric acid (ml) | Amount of solution (ml) | pH | ORP (mV) |
| Experimental Example 3-1 | 25.0 | 1.25 | 11.0 | 2.0 | 60 | 3.0 | 12.5 | 246 | 2.0 | 179 |
| Experimental Example 3-2 | 25.0 | 1. 25 | 11.0 | 1.6 | 60 | 3.0 | 14.7 | 251 | 1.6 | 207 |
| Experimental Example 3-3 | 25.0 | 1. 25 | 11.0 | 1.2 | 60 | 3.0 | 18.5 | 250 | 1.2 | 240 |
| Experimental Example 3-4 | 25.0 | 1. 25 | 11.0 | 0.8 | 60 | 3.0 | 24.5 | 260 | 0.8 | 281 |

**[Table 8]**

| | pH | Leaching rate (%) | | |
|---|---|---|---|---|
| | | Ni | Co | Cu |
| Experimental Example 3-1 | 2.0 | 88 | 89 | 0.0 |
| Experimental Example 3-2 | 1.6 | 94 | 94 | 0.1 |
| Experimental Example 3-3 | 1.2 | 97 | 97 | 0.2 |
| Experimental Example 3-4 | 0.8 | 100 | 100 | 0.8 |

FIG. 3 and Table 8 indicate that the leaching treatment with an acid in the presence of a sulfurizing agent was effective in separating copper from the alloy and obtaining nickel and/or cobalt from the alloy in Experimental Examples 3-1 to 3-4 where the pH was controlled within the range of 0.8 to 2.0 using an acid solution.

FIG. 4 also indicate that the lower the maintained pH, the higher the consumption of the sulfuric acid aqueous solution. Specifically, the consumption was approximately 2 times higher in Experimental Example 3-4 where the pH was maintained at 0.8 than in Experimental Example 3-1 where the pH was maintained at 2.0.

Moreover, FIG. 5 indicates that the lower the pH, the larger the amount of the free acid not involved in the leaching of each metal element. The larger the amount of the free acid, the larger the consumption of the neutralizing agent for neutralizing the solution in the post-leaching treatment step. Therefore, if the alloy is subjected to the leaching treatment with the pH being controlled to less than 0.8, the consumption of the acid may increase, and the consumption of the neutralizing agent for neutralizing the acid in the later step may also increase.

### Example 4: Temperature Conditions

Discarded LIBs were subjected to a pyrometallurgical process as in Example 1. The molten alloy resulting from the reductive melting was poured into a small crucible with a hole at its bottom. High-pressure gas or water was sprayed to the molten alloy flowing out of the hole to scatter and solidify the molten alloy into a powdery material (atomized powder) with a particle size of at most 300 µm. The resulting atomized alloy powder was used as the target to be processed. Table 9 below shows the composition of the atomized powder (powdery material) analyzed with an ICP analyzer.

**[Table 9]**

| | Content (% by mass) | | | | | |
|---|---|---|---|---|---|---|
| | Ni | Co | Cu | Fe | Mn | S |
| Alloy (Powder) | 15 | 12 | 70 | 1.3 | 0.09 | 0.05 |

Next, 25.0 g of the atomized powder was sampled, and 11.0 g of a sulfurizing agent (button-shaped elemental sulfur granules 4 to 5 mm in diameter and 1 mm in thickness) was provided, which corresponded to 1.25 equivalents (by mole) based on the amount of copper in the alloy.

Subsequently, the alloy powder and the sulfurizing agent were placed in a heat-resistant glass separable flask (volume 500 mL) with four baffles, to which 250 mL of pure water was added. The mixture was then stirred with a stirrer equipped with four inclined paddle blades made of Teflon (registered trademark) at a speed of 1,000 rpm, which prevented the atomized powder from settling on the bottom of the reaction vessel, to give a slurry.

An oxidizing agent (air) through a glass filter was also bubbled at a flow rate of 0.5 L/min into the mixture so that an oxidative atmosphere was maintained during the reaction.

After the air bubbling, the slurry was heated to a predetermined temperature (each set temperature shown in Table 10 below), and an acid solution (an aqueous solution of 64% by weight sulfuric acid) was added at a flow rate of 15 mL/h to reduce the pH of the slurry to 1.2. Subsequently, at the maintained pH and temperature, the ORP of the slurry was controlled by the addition of the oxidizing agent while the atomized powder was subjected to the leaching treatment. More specifically, the slurry was subjected to the leaching treatment at each set temperature with the air being bubbled into the slurry to control the ORP. After the addition of sulfuric acid, 2 mL of the supernatant of the slurry was sampled every one hour during the leaching and subjected to analysis with an ICP analyzer in which the concentration of each of the components: copper, nickel, cobalt, iron, and sulfur was measured.

In order to prevent the oxidation of the produced copper sulfide, the ORP (reference electrode: silver-silver chloride electrode) value was controlled within the range of 240 mV to 300 mV during the reaction. Specifically, when the ORP value reached 270 mV, the flow rate of the oxidizing agent (air) was reduced by half, and then when the ORP value continued to increase, the oxidizing agent (air) was further reduced by half. After this operation was repeated, the air bubbling was finally stopped.

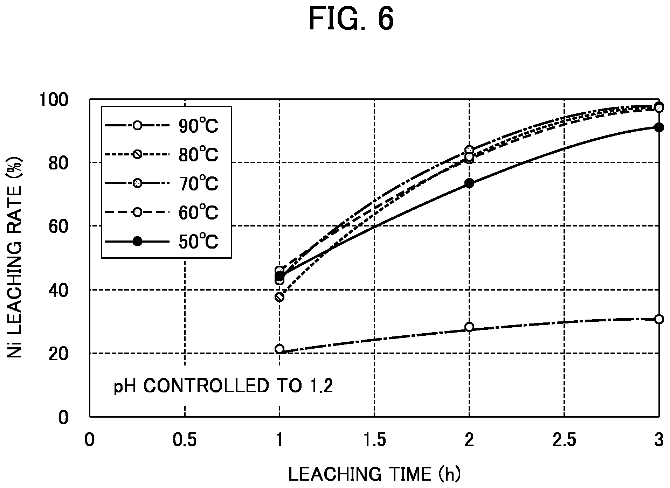

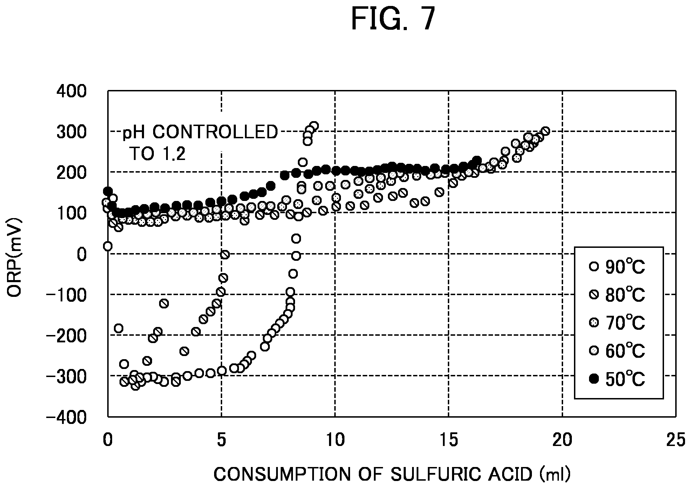

Table 10 below shows the leaching treatment conditions and the results (final values) of the treatment under the set conditions. Table 11 below shows the leaching rates of copper, nickel, and cobalt, which were measured by ICP analysis. FIG. 6 is a graph showing the relationship between the leaching time period and the leaching rate of nickel. FIG. 7 is a graph showing the relationship between the consumption of sulfuric acid and the ORP. Table 10 shows the amounts of the solution resulting from the leaching, which include a level lower than the starting amount of the solution (250 mL). Such a level was due to the effect of evaporation by heating. Table 10 also shows an ORP value higher than 300 mV. Such a value was due to an accidental increase in ORP (caused by stirring-induced entrainment of air) after the air bubbling was stopped.

**[Table 10]**

| | Powder (Alloy) (g) | Sulfurizing agent | | Experimental conditions | | | Experimental conditions (Final values) | | | |
|---|---|---|---|---|---|---|---|---|---|---|
| | | Equivalents (vs Cu) | Mass (g) | pH | Temperature (°C) | Time (h) | Amount of sulfuric acid (ml) | Amount of solution (ml) | pH | ORP (mV) |
| Experimental Example 4-1 | 25.0 | 1.25 | 11.0 | 1.2 | 50 | 3.0 | 16.2 | 253 | 1.2 | 226 |
| Experimental Example 4-2 | 25.0 | 1.25 | 11.0 | 1.2 | 60 | 3.0 | 18.5 | 250 | 1.2 | 240 |
| Experimental Example 4-3 | 25.0 | 1.25 | 11.0 | 1.2 | 70 | 3.0 | 18.7 | 252 | 1.2 | 273 |
| Experimental Example 4-4 | 25.0 | 1.25 | 11.0 | 1.2 | 80 | 3.0 | 19.2 | 251 | 1.2 | 295 |
| Experimental Example 4-5 | 25.0 | 1.25 | 11.0 | 1.2 | 90 | 3.0 | 9.1 | 232 | 1.2 | 310 |

**[Table 11]**

| | Temperature (°C) | Leaching rate (%) | | |
|---|---|---|---|---|
| | | Ni | Co | Cu |
| Experimental Example 4-1 | 50 | 94 | 94 | 0.2 |
| Experimental Example 4-2 | 60 | 97 | 97 | 0.2 |
| Experimental Example 4-3 | 70 | 100 | 100 | 1.2 |
| Experimental Example 4-4 | 80 | 99 | 99 | 1.8 |
| Experimental Example 4-5 | 90 | 34 | 27 | 2.6 |

FIG. 6 and Table 11 indicate that the leaching treatment with an acid in the presence of a sulfurizing agent was effective in separating copper from the alloy and obtaining nickel and/or cobalt from the alloy in Experimental Examples 4-1 to 4-4 where the leaching temperature was controlled within the range of 50°C to 80°C.

Specifically, FIG. 7 indicates that when the leaching temperature was controlled within the range of 60°C to 80°C during the leaching treatment in Experimental Examples 4-2 to 4-4, the ORP reached 240 mV so that nickel and/or cobalt was leached at a high rate and that the leaching of nickel and/or cobalt was completed in a short period of time.

Moreover, when the leaching temperature was controlled within the range of 50°C to 70°C during the leaching treatment in Experimental Examples 4-1 to 4-3, the ORP was constantly within the positive range during the leaching treatment so that the slow progress of the copper sulfide-producing reaction was prevented, which would otherwise be caused by the generation of hydrogen sulfide gas or hydrogen gas.

On the other hand, when the leaching temperature was controlled to 90°C during the leaching treatment in Experimental Example 4-5, the leaching rate of copper was higher than that in Experimental Examples 4-1 to 4-4. This may be because at the negative ORP, a large amount of hydrogen sulfide gas was produced from the sulfurizing agent and released from the solution so that the progress of the copper sulfide-producing reaction was hindered or because a sharp rise in ORP caused the precipitated copper sulfide to be oxidized and leached into the leachate.

Moreover, the leaching rates of nickel and cobalt were lower in Experimental Example 4-5 than in Experimental Examples 4-1 to 4-4. This may be because an excessive leaching reaction occurred to sulfurize nickel and/or cobalt or because precipitation of sulfur (the sulfurizing agent) on the surface of the alloy occurred to hinder the sufficient progress of the leaching treatment. Alternatively, this may be because an excessive leaching reaction occurred to cause hydrogen ions in the leachate to be released in the form of hydrogen sulfide gas or hydrogen gas from the leachate and thus to hinder the progress of the leaching treatment.

### Example 5: Size of Alloy Particles to be Processed

Discarded LIBs were subjected to a pyrometallurgical process as in Example 1. The molten alloy resulting from the reductive melting was poured into a small crucible with a hole at its bottom. High-pressure gas or water was sprayed to the molten alloy flowing out of the hole to scatter and solidify the molten alloy into a powdery material (atomized powder) with a particle size of at most 300 µm. The resulting atomized alloy powder was used as the target to be processed. Table 12 below shows the composition of the atomized powder (powdery material) analyzed with an ICP analyzer.

**[Table 12]**

| | Content (% by mass) | | | | | |
|---|---|---|---|---|---|---|
| | Ni | Co | Cu | Fe | Mn | S |
| Alloy (Powder) | 12 | 12 | 77 | 1.4 | 0.04 | 0.01 |

Next, the resulting atomized powder was sieved and classified into three particle size types. Table 13 below shows the mass and distribution of each particle size type.

**[Table 13]**

| | Particle size (µm) | Mass (g) | Distribution (%) |
|---|---|---|---|
| Alloy (Powder) | Less than 150 | 13760 | 89.1 |
| | 150 to 300 | 1570 | 10.2 |
| | 300 to 500 | 106 | 0.7 |
| | More than 500 | 2 | 0.0 |
| | Total | 15438 | 100.0 |

Table 13 indicates that the atomized powder produced from discarded LIBs is almost free of particles with sizes of more than 500 µm and contains nearly 90% of particles with sizes of less than 150 µm.

Next, 25.0 g of the atomized powder of each particle size type was sampled, and 9.7 g of a sulfurizing agent (button-shaped elemental sulfur granules 4 to 5 mm in diameter and 1 mm in thickness) was provided, which corresponded to 1.25 equivalents (by mole) based on the amount of copper in the alloy.

Subsequently, the alloy powder and the sulfurizing agent were placed in a heat-resistant glass separable flask (volume 500 mL) with four baffles, to which 250 mL of pure water was added. The mixture was then stirred with a stirrer equipped with four inclined paddle blades made of Teflon (registered trademark) at a speed of 1,000 rpm, which prevented the atomized powder from settling on the bottom of the reaction vessel, to give a slurry.

An oxidizing agent (air) through a glass filter was also bubbled at a flow rate of 0.5 L/min into the mixture so that an oxidative atmosphere was maintained during the reaction.

After the air bubbling, the slurry was heated to 60°C, and an acid solution (an aqueous solution of 64% by weight sulfuric acid) was added at a flow rate of 15 mL/h to reduce the pH of the slurry to 1.6. Subsequently, under control to maintain the pH and the temperature, the leaching treatment was carried out until the ORP value reached 250 mV. After the leaching, the slurry was collected and subjected to solid-liquid separation. The resulting filtrate was measured for the concentration of each of the components: copper, nickel, cobalt, iron, and sulfur with an ICP analyzer.

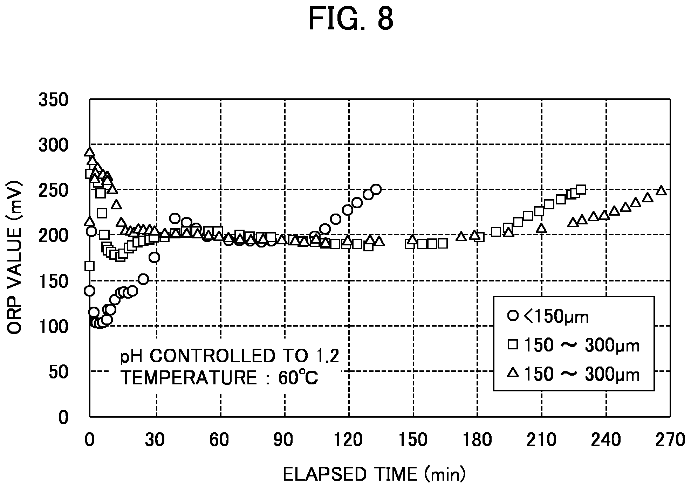

Table 14 below shows the leaching treatment conditions and the results (final values) of the treatment under the set conditions. Table 15 below shows the leaching rates of copper, nickel, and cobalt, which were measured by ICP analysis. FIG. 8 is a graph showing the time course of the ORP value against the leaching time for which the atomized powder of each particle size type was subjected to the leaching treatment.

**[Table 14]**

| | Particle size (µm) | Powder (Alloy) (g) | Sulfurizing agent | | Experimental conditions | | Experimental conditions (Final values) | |
|---|---|---|---|---|---|---|---|---|
| | | | Equivalents (vs Cu) | Mass (g) | pH | Temperature (°C) | Amount of sulfuric acid (ml) | Time (Minutes) |
| Experimental Example 5-1 | Less than 150 | 25.0 | 1.25 | 12.1 | 1.6 | 60 | 14.0 | 134 |
| Experimental Example 5-2 | 150 to 300 | 25.0 | 1.25 | 12.1 | 1.6 | 60 | 13.6 | 230 |
| Experimental Example 5-3 | 300 to 500 | 25.0 | 1.25 | 12.1 | 1.6 | 60 | 13.3 | 267 |

**[Table 15]**

| | Particle size (µm) | Leaching rate (%) | | |
|---|---|---|---|---|
| | | Ni | Co | Cu |
| Experimental Example 5-1 | Less than 150 | 99 | 99 | 0.3 |
| Experimental Example 5-2 | 150 to 300 | 97 | 97 | 0.4 |
| Experimental Example 5-3 | 300 to 500 | 97 | 97 | 0.2 |

FIG. 8 and Table 15 indicate that the leaching treatment with an acid in the presence of a sulfurizing agent was effective in separating copper from the alloy and obtaining nickel and/or cobalt from the alloy in Experimental Examples 5-1 to 5-3 where the alloy powder with a particle size of less than 500 µm was subjected to the leaching treatment.

Moreover, Tables 14 and 15 indicate that the leaching time period required for the treatment and the leaching rate of nickel and/or cobalt were respectively shorter and higher in Experimental Example 5-1 where the powder with a particle size of less than 150 µm was subjected to the leaching treatment than in Experimental Example 5-2 or 5-3.

## Claims

1. An alloy processing method for producing a nickel- and/or cobalt-containing solution from an alloy comprising copper and nickel and/or cobalt, the method comprising:
a leaching step that comprises subjecting the alloy to a leaching treatment with an acid in the presence of a sulfurizing agent to produce a leachate;
a reduction step that comprises subjecting the leachate to a reduction treatment with a reducing agent to produce a reduced solution; and
an oxidation and neutralization step that comprises adding an oxidizing agent and a neutralizing agent to the reduced solution to produce a solution containing nickel and/or cobalt;
wherein the leaching step comprises performing the leaching treatment at an oxidation-reduction potential being controlled within a range of 240mV or more and 300 mV or less with respect to a silver-silver chloride electrode as a reference electrode during the leaching treatment with an acid solution.

2. The alloy processing method according to claim 1, wherein the alloy is a product obtained through melting a discarded lithium ion battery.

3. The alloy processing method according to claim 1 or 2, wherein the alloy is in the form of a powder.

4. The alloy processing method according to any one of claims 1 to 3, wherein the reducing agent used in the reduction step is a metallic material comprising nickel and/or cobalt, and the reduction treatment comprises bringing the leachate into contact with the metallic material.

5. The alloy processing method according to any one of claims 1 to 4, wherein the oxidation and neutralization step comprises
adding the oxidizing agent and the neutralizing agent simultaneously to the reduced solution or adding the oxidizing agent to the reduced solution and then adding the neutralizing agent to the mixture.

6. The alloy processing method according to claim 1, wherein the leaching step comprises adding an oxidizing agent to control the oxidation-reduction potential.

7. The alloy processing method according to claim 1, wherein the leaching step comprises performing the leaching treatment at a pH being controlled within a range of 0.8 or more and 2.0 or less using an acid solution.

8. The alloy processing method according to claim 7, wherein the acid solution used in the leaching step is a sulfuric acid-containing solution.

9. The alloy processing method according to claim 1, wherein the leaching step comprises performing the leaching treatment with an acid solution at a leaching temperature being controlled within a range of 50°C or more and 80°C or less.

10. The alloy processing method according to claim 1, wherein the alloy is in the form of particles with a particle size of less than 500 µm, as classified by sieving.

11. The alloy processing method according to claim 10, wherein the alloy is in the form of an atomized powder resulting from an atomization process.

12. The alloy processing method according to claim 10 or 11, wherein the alloy is in the form of a powder with a particle size of less than 150 µm.

13. The alloy processing method according to claim 1, wherein the alloy contains zinc,
the method further comprising a zinc removal step that comprises subjecting a post-neutralization solution resulting from the oxidation and neutralization step to an ion-exchange treatment or a solvent extraction treatment to remove the zinc.

14. The alloy processing method according to claim 1, wherein the alloy is in the form of an atomized powder obtained through a pyrometallurgical process comprising:
introducing a discarded lithium ion battery into a roasting furnace to produce an oxidatively roasted product;
introducing the oxidatively roasted product and a reducing agent into a reduction furnace for reductive melting to produce a molten metallic material and a reduced slag; and
subjecting the molten metallic material to an atomization process to solidify the molten metallic material into a fine powder.

## Patentansprüche

1. Legierungsverarbeitungsverfahren zum Herstellen einer nickel- und/oder kobalthaltigen Lösung aus einer Legierung, die Kupfer und Nickel und/oder Kobalt umfasst, wobei das Verfahren Folgendes umfasst:
einen Laugenschritt, der umfasst, die Legierung einer Laugenbehandlung mit einer Säure bei Vorhandensein eines Schwefelungsmittels zu unterziehen, um ein Sickerwasser herzustellen,
einen Reduktionsschritt, der umfasst, das Sickerwasser einer Reduktionsbehandlung mit einem Reduktionsmittel zu unterziehen, um eine reduzierte Lösung herzustellen; und
einen Oxidations- und Neutralisationsschritt, der umfasst, der reduzierten Lösung ein Oxidationsmittel und ein Neutralisierungsmittel hinzuzufügen, um eine Lösung herzustellen, die Nickel und/oder Kobalt enthält; und
wobei der Laugenschritt umfasst, die Laugenbehandlung bei einem Oxidationsreduktionspotential durchzuführen, das so gesteuert wird, dass es in Bezug auf eine Silber-Silberchlorid-Elektrode als Referenzelektrode während der Laugenbehandlung mit einer Säurelösung in einem Bereich von 240 mV oder mehr und 300 mV oder weniger liegt.

2. Legierungsverarbeitungsverfahren nach Anspruch 1, wobei die Legierung ein Produkt ist, das durch Schmelzen einer entsorgten Lithiumionenbatterie erhalten wird.

3. Legierungsverarbeitungsverfahren nach Anspruch 1 oder 2, wobei die Legierung in Form eines Pulvers vorliegt.

4. Legierungsverarbeitungsverfahren nach einem der Ansprüche 1 bis 3, wobei das im Reduktionsschritt verwendete Reduktionsmittel ein metallisches Material ist, das Nickel und/oder Kobalt umfasst, und die Reduktionsbehandlung umfasst, das Sickerwasser mit dem metallischen Material in Kontakt zu bringen.

5. Legierungsverarbeitungsverfahren nach einem der Ansprüche 1 bis 4, wobei der Oxidations- und Neutralisationsschritt Folgendes umfasst
Hinzufügen des Oxidationsmittels und des Neutralisationsmittels gleichzeitig zur reduzierten Lösung, oder Hinzufügen des Oxidationsmittels zur reduzierten Lösung und dann das Neutralisationsmittel zum Gemisch.

6. Legierungsverarbeitungsverfahren nach Anspruch 1, wobei der Laugenschritt umfasst, ein Oxidationsmittel hinzuzufügen, um das Oxidationsreduktionspotential zu steuern.

7. Legierungsverarbeitungsverfahren nach Anspruch 1, wobei der Laugenschritt umfasst, die Laugenbehandlung bei einem pH-Wert durchzuführen, der unter Verwendung einer Säurelösung so gesteuert wird, dass er in einem Bereich von 0,8 oder mehr und 2,0 oder weniger liegt.

8. Legierungsverarbeitungsverfahren nach Anspruch 7, wobei die im Laugenschritt verwendete Säurelösung eine schwefelsäurehaltige Lösung ist.

9. Legierungsverarbeitungsverfahren nach Anspruch 1, wobei der Laugenschritt umfasst, die Laugenbehandlung mit einer Säurelösung bei einer Laugentemperatur durchzuführen, die so gesteuert wird, dass sie in einem Bereich von 50°C oder mehr und 80°C oder weniger liegt.

10. Legierungsverarbeitungsverfahren nach Anspruch 1, wobei die Legierung in Form von Partikeln mit einer Partikelgröße von weniger als 500 µm, die durch Sieben eingestuft wird, vorliegt.

11. Legierungsverarbeitungsverfahren nach Anspruch 10, wobei die Legierung in Form eines zerstäubten Pulvers, das sich aus einem Zerstäubungsprozess ergibt, vorliegt.

12. Legierungsverarbeitungsverfahren nach Anspruch 10 oder 11, wobei die Legierung in Form eines Pulvers mit einer Partikelgröße von weniger als 150 µm vorliegt.

13. Legierungsverarbeitungsverfahren nach Anspruch 1, wobei die Legierung Zink enthält, wobei das Verfahren weiter einen Zinkentfernungsschritt umfasst,
das Verfahren weiter umfassend eine Postneutralisationslösung, die sich aus dem Oxidations- und Neutralisationsschritt ergibt, einer lonenaustauschbehandlung oder einer Lösungsmittelentnahmebehandlung zu unterziehen, um das Zink zu entfernen.

14. Legierungsverarbeitungsverfahren nach Anspruch 1, wobei die Legierung in Form eines zerstäubten Pulvers vorliegt, das durch einen Schmelzflussmetallurgieprozess erhalten wird, umfassend:
Einführen einer entsorgten Lithiumionenbatterie in einen Rösfofen, um ein oxidativ geröstetes Produkt herzustellen,
Einführen des oxidativ gerösteten Produkts und eines Reduktionsmittels in einen Reduktionsofen zum reduzierenden Schmelzen, um ein geschmolzenes metallisches Material und eine reduzierte Schlacke herzustellen; und
Unterziehen des geschmolzenen metallischen Materials einem Zerstäubungsprozess, um das geschmolzene metallische Material in ein feines Pulver zu verfestigen.

## Revendications

1. Procédé de traitement d'alliage pour produire une solution contenant du nickel et/ou du cobalt à partir d'un alliage comprenant du cuivre et du nickel et/ou du cobalt, le procédé comprenant :
une étape de lixiviation qui consiste à soumettre l'alliage à un traitement de lixiviation avec un acide en présence d'un agent sulfurant pour produire un lixiviat ;
une étape de réduction qui consiste à soumettre le lixiviat à un traitement de réduction avec un agent réducteur pour produire une solution réduite ; et
une étape d'oxydation et de neutralisation qui consiste à ajouter un agent oxydant et un agent neutralisant à la solution réduite pour produire une solution contenant du nickel et/ou du cobalt ;
dans lequel l'étape de lixiviation consiste à exécuter le traitement de lixiviation à un potentiel d'oxydoréduction régulé dans une plage de 240 mV ou plus à 300 mV ou moins par rapport à une électrode argent/chlorure d'argent utilisée comme électrode de référence pendant le traitement de lixiviation avec une solution acide.

2. Procédé de traitement d'alliage selon la revendication 1, dans lequel l'alliage est un produit obtenu par la fusion d'une batterie lithium-ion mise au rebut.

3. Procédé de traitement d'alliage selon la revendication 1 ou la revendication 2, dans lequel l'alliage est sous la forme d'une poudre.

4. Procédé de traitement d'alliage selon l'une quelconque des revendications 1 à 3, dans lequel l'agent réducteur utilisé dans l'étape de réduction est un matériau métallique comprenant du nickel et/ou du cobalt, et le traitement de réduction consiste à mettre le lixiviat en contact avec le matériau métallique.

5. Procédé de traitement d'alliage selon l'une quelconque des revendications 1 à 4, dans lequel l'étape d'oxydation et de neutralisation consiste à ajouter l'agent oxydant et l'agent neutralisant simultanément à la solution réduite ou à ajouter l'agent oxydant à la solution réduite puis à ajouter l'agent neutralisant au mélange.

6. Procédé de traitement d'alliage selon la revendication 1, dans lequel l'étape de lixiviation consiste à ajouter un agent oxydant pour réguler le potentiel d'oxydoréduction.

7. Procédé de traitement d'alliage selon la revendication 1, dans lequel l'étape de lixiviation consiste à exécuter le traitement de lixiviation à un pH régulé dans une plage de 0,8 ou plus à 2,0 ou moins en utilisant une solution acide.

8. Procédé de traitement d'alliage selon la revendication 7, dans lequel la solution acide utilisée dans l'étape de lixiviation est une solution contenant de l'acide sulfurique.

9. Procédé de traitement d'alliage selon la revendication 1, dans lequel l'étape de lixiviation consiste à exécuter le traitement de lixiviation avec une solution acide à une température de lixiviation régulée dans une plage de 50 °C ou plus à 80 °C ou moins.

10. Procédé de traitement d'alliage selon la revendication 1, dans lequel
l'alliage est sous la forme de particules présentant une taille de particule de moins de 500 µm classées par tamisage.

11. Procédé de traitement d'alliage selon la revendication 10, dans lequel l'alliage est sous la forme d'une poudre atomisée résultant d'un processus d'atomisation.

12. Procédé de traitement d'alliage selon la revendication 10 ou la revendication 11, dans lequel l'alliage est sous la forme d'une poudre présentant une taille de particule de moins de 150 µm.

13. Procédé de traitement d'alliage selon la revendication 1, dans lequel l'alliage contient du zinc, le procédé comprenant en outre une étape de retrait de zinc qui consiste à soumettre une solution post-neutralisation résultant de l'étape d'oxydation et de neutralisation à un traitement par échange d'ions ou à un traitement d'extraction par solvant pour retirer le zinc.

14. Procédé de traitement d'alliage selon la revendication 1, dans lequel l'alliage est sous la forme d'une poudre atomisée obtenue par un processus pyrométallurgique consistant à :
introduire une batterie lithium-ion mise au rebut dans un four de grillage pour produire un produit obtenu par grillage oxydant ;
introduire le produit obtenu par grillage oxydant et un agent réducteur dans un four de réduction pour une fusion réductrice pour produire un matériau métallique en fusion et un laitier réduit ; et
soumettre le matériau métallique en fusion à un processus d'atomisation pour solidifier le matériau métallique en fusion en une poudre fine.
